# EUROPEAN PATENT APPLICATION

(11) **EP 1 890 492 A2**
(43) Date of publication of application: **20.02.2008**
(21) Application number: 07113551.1
(22) Date of filing: 31.07.2007
(51) Int. Cl.: H04N 7/16, H04N 5/445

(54) **Image processing apparatus**

(30) Priority: 16.08.2006 KR 20060077210
(71) Applicant: Samsung Electronics Co., Ltd., Suwon-si 442-742 Gyeonggi-do (KR)
(72) Inventor: Kim, Mun-seok, Gyonggi-do (KR); Kim, Do-young, Gyeonggi-do (KR); Song, Yong-chun, Gyeonggi-do (KR)
(74) Representative: Pisani, Diana Jean

(57) **Abstract**

An image processing apparatus, such as a TV, set top box, etc. includes a receiving unit which receives an image signal, an image processor which processes the image signal, a storage unit which stores setting information related to processing of the image signal, a controller which controls the image processor to process the image signal with reference to the setting information when an external controlling program comprised in the image signal is executed. This ensures that any displayed output from the external controlling program is displayed in accordance with the setting information, which may include video settings such as aspect ratio and so on, avoiding disruption in the presentation of images to a viewer.

## Description

The present invention relates to image processing, and more particularly, to image processing apparatuses and image processing methods for executing an external application which is received with an image signal.

An image processing apparatus or a display apparatus (hereinafter, referred to as "image processing apparatus") such as a TV, a set-top box, etc., processes an image signal inputted from outside of the image processing apparatus to display an image. The image signal processed by the image processing apparatus comprises a broadcasting signal. The broadcasting signal, in turn, comprises an analog broadcasting signal and a digital broadcasting signal.

Technology connected to a digital TV broadcasting comprises various kinds of specifications, for example, an Open Cable Application Platform (OCAP), which is a standard of a bidirectional broadcasting in the U.S.A., a Multimedia Home Platform (MHP) which is a standard of a bidirectional broadcasting in Europe, etc. According to such specifications, various kinds of the applications, such as a Java application, for example, are downloaded to the image processing apparatus. Thus, the image processing apparatus may operate services provided by a broadcaster and/or ask a user to use some functions according to a downloaded application (hereinafter, referred to as "external controlling program").

The image processing apparatus acts as a host for the external controlling program. Specifically, the external controlling program operates according to various functions provided from the host by using an application programming interface (API) which is provided in the image processing apparatus. Specifications such as the OCAP and the MHP include information regarding the relationship between the external controlling program and the image processing apparatus.

However, the specifications do not include the setting information in the host that the external controlling program refers to when the external controlling program is executed. Herein, the setting information comprises not only information regarding video settings, such as aspect ratio, e.g., 4:3, 16:9, etc., but also information set by a user, such as a favourite channel. Sometimes, when the external controlling program controls the host, if the image processing apparatus does not display the state which is pre-set by the user, the user might think that the image processing apparatus is not working properly.

For example, when the user is watching an image with an aspect ratio of 4:3 and the external controlling program is downloaded and executed, the external controlling program operates without referring to the setting information (i.e., 4:3) which is pre-set by the user. Accordingly, the image processing apparatus may change the video settings of the screen into the video settings that are set in the external controlling program (for example, 16:9, 1280*720). In that case, the user may think the image processing apparatus is not working properly because the video size is suddenly changed. A similar case may occur when the external controlling program terminates.

Thus, there is a need for the external controlling program to consider the state, which is pre-set by the user, when the external controlling program uses the API to control the host, since the setting information of the image processing apparatus may be effected by both the external controlling program (hereinafter referred to as "a host controlling program") and an application in the image processing apparatus (hereinafter, referred to as "native application").

Accordingly, it is an aspect of the present invention to provide an image processing apparatus and an image processing method, which are capable of maintaining a state set by a user even though the image processing apparatus and the image processing method are controlled by an external controlling program received from outside of the image processing apparatus.

Also, an aspect of the present invention provides an image processing apparatus and an image processing method, which are able to adapt a function of an external controlling program as the external controlling program refers to a user setting.

According to a first aspect of the invention, an image processing apparatus comprises a receiving unit arranged to receive an image signal from a source external to the image processing apparatus, an image processor arranged to process the image signal, a storage means arranged to store setting information related to processing of the image signal and a controller arranged to control the image processor to process the image signal in accordance with the setting information if an external controlling program comprised in the image signal is executed.

The image processing apparatus may further comprise a user input unit through which a command from a user can be inputted, wherein the controller is arranged to set the setting information according to the command.

The controller may comprise an application programming interface (API) which provides a function that can be called by the external controlling program, configured to return the setting information to the external controlling program.

The controller may comprise an API which provides a function that can be called by the external controlling program, configured to cause the image processor to process the image signal according to the setting information.

The controller may be arranged to determine whether the external controlling program has a right to use the API.

The controller may be arranged to control the image processor according to a host controlling program provided in the image processing apparatus.

The external controlling program may comprise a Java application.

The setting information may comprise at least one of a video size, a user preference channel, a multi-channel television sound (MTS), an image quality improving mode, a sound mode and an image mode.

The image processing apparatus may further comprise a display unit arranged to display an image according to the image signal processed in the image processor.

The invention also provides an image processing method comprising receiving an image signal at an image processing apparatus from a source external to the image processing apparatus; processing the image signal and storing setting information related to processing of the image signal by the image processing apparatus and, if an external controlling program comprised in the image signal is executed, processing the image signal by the external controlling program according to the setting information.

The image processing method may further comprises setting the setting information by instruction of user.

The processing of the image signal may comprise calling a function which is provided from an API provided in the image processing apparatus and which causes the image signal to be processed by the external controlling program according to the setting information.

The image processing method may further comprises determining whether the external controlling program has a right to use the API.

The processing of the image signal and the storing of the setting information may be controlled by a host controlling program provided in the image processing apparatus.

The external controlling program may comprise a Java application.

The setting information may comprise at least one of a video size, a user preference channel, a MTS, an image quality improving mode, a sound mode and an image mode.

Example embodiments of the invention will now be described with reference to the accompanying drawings, of which:
FIG. 1 is a block diagram illustrating a configuration of an image processing apparatus according to an embodiment of the present invention;
FIG. 2 illustrates a structure of software for a controller of the image processing apparatus of FIG. 1; and
FIG. 3 is a flow chart illustrating the operation of the image processing apparatus of FIG. 1.

In the accompanying drawings, like reference numerals refer to like elements throughout.

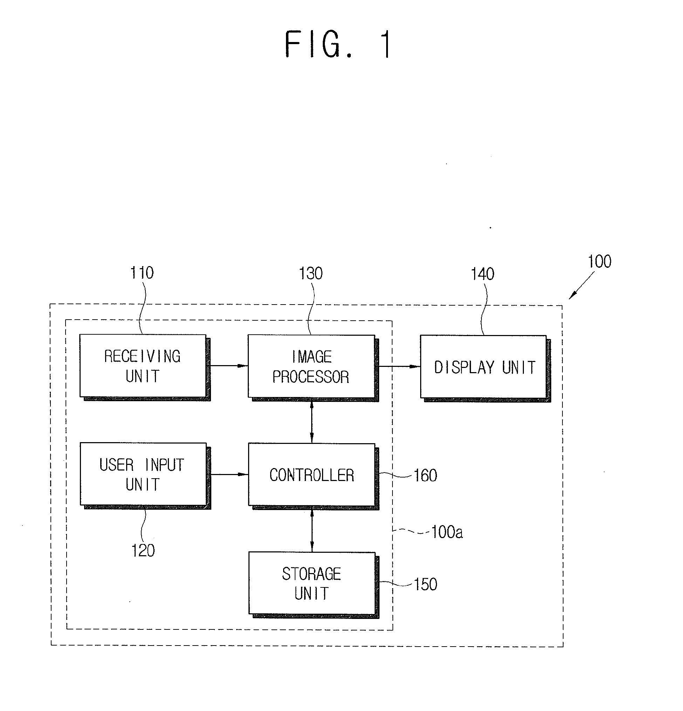

FIG. 1 is a block diagram of an image processing apparatus 100 according to an embodiment of the present invention. The image processing apparatus 100 processes an inputted image signal so as to display an image. In this example, the image signal comprises a digital TV broadcasting signal for terrestrial broadcasting or for cable digital TV broadcasting and the image processing apparatus 100 comprises a digital TV or a set-top box for the digital TV, capable of receiving and processing the digital TV broadcasting signal.

As shown in FIG. 1, the image processing apparatus 100 comprises a receiving unit 110, a user input unit 120, an image processor 130, a display unit 140, a storage unit 150 and a controller 160. The receiving unit 110 receives an image signal from outside of the image processing apparatus 100. Specifically, the receiving unit 110 receives an image signal corresponding to a channel selected by a user according to the controlling of the controller 160. The receiving unit 110 may receive the image signal by tuning a frequency corresponding to the selected channel.

Instructions, or commands, from the user, which relate to the operation of the image processing apparatus 100, are inputted through the user input unit 120. The user input unit 120 transmits the user's instructions to the controller 160. The user input unit 120 may comprise, for example, a remote controller, etc.

The image processor 130 processes the image signal under the control of the controller 160. The aforementioned processing of the image signal may comprise, for instance, decoding, processing to improve quality of the image, scaling to adjust a size of the image, and so on.

The display unit 140 displays the image corresponding to the image signal processed by the image processor 130. The display unit 140 may comprise, for example, a Liquid Crystal Display (LCD) panel, a Plasma Display Panel (PDP), and so on. On the other hand, if the image processing apparatus 100 comprises the set-top box, then the image processing apparatus 100 need not comprise the display unit 140 (referring to 100a of FIG. 1).

In the storage unit 150, setting information is stored, which is connected with the processing of the image signal. The setting information may comprise user setting information corresponding to settings selected by the user. The setting information may comprise, for example, a video size or aspect ratio, a user's favourite channel, a multi-channel television sound (MTS), an image quality improving mode, e.g., digital natural image engine (DNIe) mode, a sound mode, an image mode and so on.

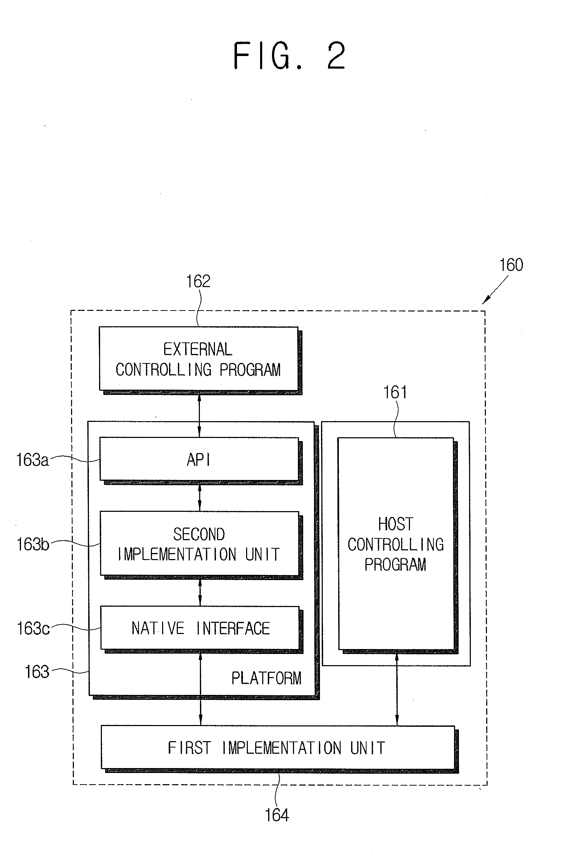

The controller 160 generally controls the image processing apparatus 100. As shown in FIG. 2, the controller 160 controls the receiving unit 110, the image processor 130, etc., in accordance with a host controlling program 161. For example, the controller 160 controls the image processor 130 to display an image corresponding to an image signal inputted from an external source, that is, a source outside the image processing apparatus 100, in accordance with the host controlling program 161.

It is preferable, but not necessary, for the controller 160 to read the host controlling program 161 from a predetermined non-volatile memory (not shown) in which it is stored. It is preferable, but not necessary, for the controller 160 to comprise a processor (not shown), which is operated by a command included in the host controlling program 161 and a Random Access Memory (RAM) (not shown), in which the host controlling program 161 is temporarily saved. Alternatively, the image processing apparatus 100 may comprise a non-volatile memory in which the host controlling program 161 is stored.

Furthermore, the controller 160 may operate in accordance with an external controlling program 162 comprised in the image signal. The external controlling program 162 may be provided by a service provider and may comprise an application for a data broadcasting service, etc. The controller 160 executes the external controlling program 162 for the corresponding service, based on the command of the external controlling program 162, if the controller 160 determines that the image signal comprises the external controlling program 162 while the controller 160 is being operated by the host controlling program 161. For instance, the external controlling program 162 may be a kind of broadcasting and may comprise information about recording a program which is currently being broadcasted or about recording a program that will be broadcasted later. The external controlling program 162 may comprise, for instance, a Java application such as an Xlet, a DVB-J, etc.

As shown in FIG. 2, the controller 160 comprises a first implementation unit 164. The first implementation unit 164 comprises a native implementation and supports a general function of the image processing apparatus 100, which is dependent on the host (host-dependent), with respect to the host controlling program 161.
The controller 160 further comprises a platform 163 that acts as an interface between the external controlling program 162 and the first implementation unit 164. The platform 163 comprises an API 163a, a second implementation unit 163b and a native interface 163c. The API 163a provides various functions which are needed to execute the external controlling program 162, so that the external controlling program 162 can be executed independently of the host. The second implementation unit 163b comprises a Java implementation and provides a function of the Java API. The native interface 163c provides functions and information which are needed in the second implementation unit 163b and depends on the host. Furthermore, the native interface 163c is a layer which provides access to the first implementation unit 164. A part of the platform 163 may be embodied by a specification such as a standard interface, for example, an OCAP, etc.

The API 163a comprises a function which is called by the external controlling program 162 and is capable of referring to the user setting information stored in the storage unit 150. Correspondingly, the external controlling program 162 is programmed so that the external controlling program 162 uses a function provided by the API 163a when a predetermined operation is performing so as to refer to the user setting information.

Specifically, the API 163a may comprise a function which directly transmits the user setting information in the storage unit 150 to the external controlling program 162. For example, when the controller 160 displays an icon, which indicates that there is a service by the external controlling program 162 on the screen in accordance with the external controlling program 162, the controller 160 controls the image processor 130 to display an image by referring to the video settings provided by a function of the API 163a such as aspect ratios of 4:3, 16:9, etc., which are set by the user.

In another embodiment, the API 163a may comprise a function which causes the image to be processed according to the user setting information stored in the storage unit 150. Such a function is useful in a case where the user setting information is unique to the image processing apparatus 100 and the external controlling program 162 is not able to properly recognize the user setting information, even though the external controlling program 162 inputs the user setting information. Furthermore, the full size of the image may differ according to the host manufacturer and it may occur that the external controlling program 162 does not input this information in advance. In such an event, the external controlling program 162 is not capable of properly adjusting the full size of the image displayed by the image processing apparatus 100. In this case, the API 163a provides a function, which corresponds to the image according to the setting selected by the user, such as SetUserSize(), SetVideoSizeByNative(), etc., to the external controlling program 162, so that the full image is maintained, according to the setting established by the user, when the image is displayed according to the external controlling program 162.

According to an embodiment of the present invention, an unexpected result is prevented from occurring, since the API 163a causes the external controlling program 162 to refer to the user setting information that is connected to the function provided by the API 163a. In this manner, it is possible for the function to be set by the user and to be controlled by the external controlling program 162.

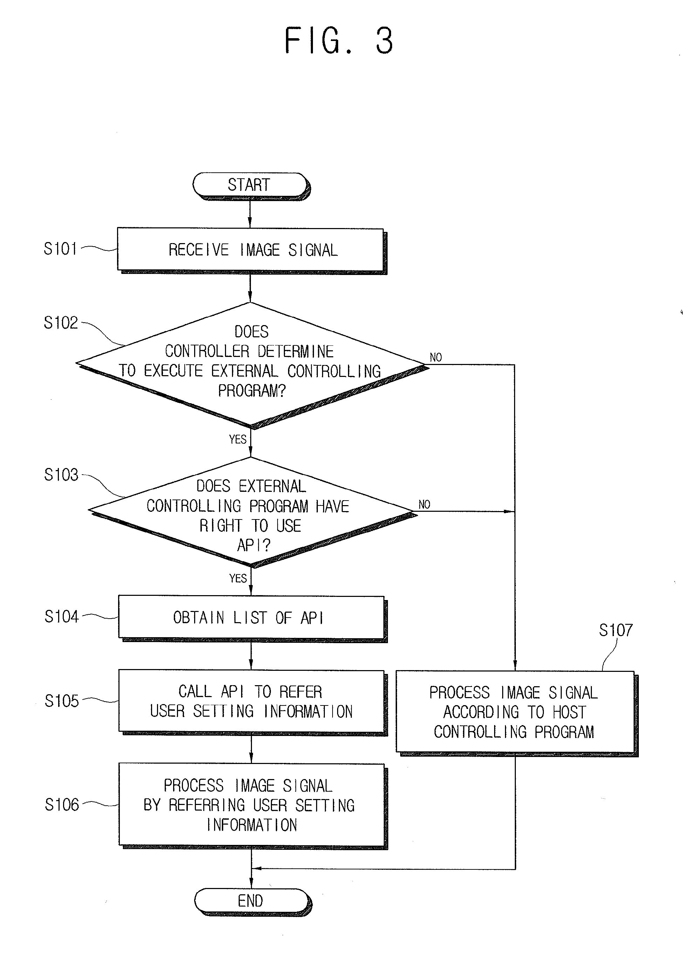

As shown in FIG. 3, the receiving unit 110 receives the image signal, which corresponds to the channel selected by the user, under the control of the controller 160 in operation S101. In this case, the controller 160 controls the receiving unit 110 according to the host controlling program 161.

Then, the controller 160 determines whether to execute the external controlling program 162 in operation S102. For example, if the received image signal comprises the external controlling program 162, then the controller 160 may determine to execute the external controlling program 162. It is preferable, but not necessary, that it is confirmed by the user whether or not the external controlling program 162 is to be executed. If the controller 160 determines that the external controlling program 162 is not to be executed, in operation S102, then the controller 160 controls the image processor 130 so as to process the image signal normally, according to the host controlling program 161, in operation S107.

If the controller 160 determines that the external controlling program 162 is to be executed, in operation S102, then the controller 160 determines whether or not the external controlling program 162 has a right to use the API 163a in operation S103. If the external controlling program 162 does not have the right to use the API 163a, then the controller 160 continues to process the image signal normally, in operation S107.

However, if the external controlling program 162 has the right to use the API 163a, then the controller 160 executes the external controlling program 162 and obtains a list of the API 163a according to the external controlling program 162 in operation S104. Then, the controller 160 calls the function to refer to the user setting information by using the list of the API 163a, while being controlled by the external controlling program 162, in operation S105. In this case, the API 163a directly transmits the user setting information to the external controlling program 162 and/or provides the function which causes the image signal to be displayed according to the user setting information, as described above. Then, the controller 160 controls the image processor 130 to process the image signal by referring to the user setting information according to the external controlling program 162 in operation S106. For example, if a video aspect ratio set by a user is 4:3, the controller 160 provides a video having an aspect ratio of 4:3 by default, if the external controlling program 162 is being executed.

As described above, the image processing apparatus is capable of maintaining user settings since the external controlling program 162 refers to the user setting information, even though the image processing apparatus 100 is being controlled by the external controlling program 162, which is external to the image processing apparatus 100.

Accordingly, embodiments of the present invention can improve reliability with respect to the displaying of images because the user is prevented from perceiving disturbances and disruptions to displayed images when the external application is executed.

Additionally, embodiments of the present invention cause the external controlling program 162 to refer to user settings and a function of the external controlling program 162 to be adjusted accordingly.

Although a few example embodiments of the present invention have been described above with reference to the accompanying drawings, it will be appreciated by those skilled in the art that numerous modifications may be made to the exemplary embodiments of the present invention without departing from the scope of the present invention, which is defined by the appended claims.

## Claims

1. An image processing apparatus comprising:
a receiving unit arranged to receive an image signal;
an image processor arranged to process the image signal;
a storage unit arranged to store setting information related to processing of the image signal; and
a controller arranged to control the image processor to process the image signal with reference to the setting information if an external controlling program is executed,
wherein the image signal comprises the external controlling program.

2. An image processing apparatus according to claim 1, further comprising a user input unit through which an instruction of a user can be inputted;
wherein the controller is arranged to set the setting information in accordance with the instruction.

3. An image processing apparatus according to claim 1 or 2, wherein the controller comprises an application programming interface which provides a function that can be called by the external controlling program, configured to return the setting information to the external controlling program.

4. An image processing apparatus according to claim 1, 2 or 3, wherein the controller comprises an application programming interface which provides a function called by the external controlling program and is configured to instruct the image processor to process the image signal in accordance with the setting information.

5. An image processing apparatus according to claim 3, wherein the controller is arranged to determine whether the external controlling program is permitted to use the API.

6. An image processing apparatus according to any preceding claim, wherein the controller is arranged to control the image processor in accordance with a host controlling program provided in the image processing apparatus.

7. An image processing apparatus according to any preceding claim, wherein the external controlling program comprises a Java application.

8. An image processing apparatus according to any preceding claim, wherein the setting information comprises at least one of a video size, a user preference channel, a multi-channel television sound (MTS), an image quality improving mode, a sound mode and an image mode.

9. An image processing apparatus according to any preceding claim, further comprising a display unit arranged to display an image in accordance with the image signal processed by the image processor.

10. An image processing method comprising:
receiving an image signal at an image processing apparatus;
storing setting information that is related to processing of the image signal; and
processing the image signal by the image processing apparatus by referring to the setting information if an external controlling program is executed, wherein the image signal comprises the external controlling program.

11. An image processing method according to claim 10, further comprising setting the setting information in accordance with input instructions.

12. An image processing method according to claim 10 or 11, wherein said processing comprises calling a function, which is provided from an application programming interface provided in the image processing apparatus,
wherein the function instructs the image signal to be processed in accordance with the setting information, and
wherein the function is called by the external controlling program.

13. An image processing method according to claim 12, further comprising determining whether the external controlling program is permitted to use the API.

14. An image processing method according to any of claims 10 to 13, wherein the processing of the image signal and the storing of the setting information are governed by a host controlling program provided in the image processing apparatus.

15. An image processing method according to any of claims 10 to 14, wherein the external controlling program comprises a Java application.

16. An image processing method according to any of claims 10 to 15, wherein the setting information comprises at least one of a video size, a user preference channel, a MTS, an image quality improving mode, a sound mode, and an image mode.
